Europäisches Patentamt

European Patent Office

Office européen des brevets

(11) Veröffentlichungsnummer: **0 315 843**
**A1**

## (12) EUROPÄISCHE PATENTANMELDUNG

(21) Anmeldenummer: 88118037.6

(22) Anmeldetag: 29.10.88

(51) Int. Cl.⁴: **B64C 31/02 , B64C 39/08**

(30) Priorität: 09.11.87 DE 3737990

(43) Veröffentlichungstag der Anmeldung:
17.05.89 Patentblatt 89/20

(84) Benannte Vertragsstaaten:
**DE ES FR IT**

(71) Anmelder: **Schulz, Dieter**
**Burggartenstrasse 2**
**D-5300 Bonn 1(DE)**

(72) Erfinder: **Schulz, Dieter**
**Burggartenstrasse 2**
**D-5300 Bonn 1(DE)**

(54) **Ultraleichtes Tragflügelverbundflugzeug.**

(57) Um ein besonders leichtes, einfach herstellbares und effizientes Ultraleichtflugzeug zu erhalten, werden Rohre identischen Typs (10-19) mit identischen Beschlägen (20) zu einem vertikal und horizontal besonders sinnvoll gestaffeltem Tandem verbunden, wobei die Flächen (1, 2) im Bereich der größten Spannweite je eine gemeinsame Endscheibe (3) aufweisen, sodaß eine boxwing-Konfiguration resultiert.

Zeichnung I

EP 0 315 843 A1

## Ultraleichtes Tragflügelverbundflugzeug

Die vorliegende Erfindung betrifft Tragflächenverbundsysteme - im folgenden TVS -, bei denen tandemartig angeordnete Tragflächen im Bereich der größten Spannweite durch weitere Flächenteile zum Verbund in mechanischer und aerodynamischer Hinsicht ergänzt werden.

TVS werden allgemein seit den Anfängen des aerodynamischen Fliegens unter den Begriffen joined wing, warren-wing und box-wing sowie in Sonderformen des Ringflügels in mannigfaltiger Form vorgeschlagen. Dabei bezeichnet joined-wing Konfigurationen, die in der Frontsicht eine Raute zeigen, wie sie sich ergibt, wenn vertikal gestaffelte Flächen im Bereich größerer Spannweite verbunden sind. Unter warren-wing sind Konfigurationen zu verstehen, die in der Draufsicht eine Raute zeigen, wie sie sich aus dem Verbund positiv und negativ gepfeilter Flächen im Bereich der größten Spannweite ergibt. Der box-wing Konfiguration sind solche zuzuordnen, bei denen die Frontansicht die Form eines Rechtecks oder eines Trapezes zeigt, wie es entsteht, wenn vertikal gestaffelte Flächen durch mehr oder weniger lotrechte Seitenscheibenelemente im Bereich der größten Spannweite verbunden sind.

Bei der vorliegenden Konfiguration handelt es sich um eine boxwing-Konfiguration, die als optimal unter Berücksichtigung der Auslegungserfordernisse eines motorgetriebenen Ultraleichtflugzeuges gelten kann.

Als Kriterien der Entwurfsaufgabe Ultraleichtflugzeug in Hybridbauweise - Rohr/Tuch - können in aerodynamischer Hinsicht genannt werden: gutes Auftriebs-/Widerstandsverhältnis bei machbarer Streckung durch hohe Flächeneffizienz im Sinne des Oswaldfaktors sowie begrenzter Anteil von Interferenz- und Parasitärwiderstand.

In flugmechanischer Hinsicht greifen die Kriterien ausreichender Stabilität und Steuerbarkeit in den bekannten Freiheitsgraden sowie unter Berücksichtigung der geringen Flächenbelastung und Penetration die Kriteriennder geringstmöglichen Böenempfindlichkeit sowie relativ geringer Sekundärmomente wie Schieberollmomente und andere, um Taumelbewegungen zu vermeiden.

In mechanischer Hinsicht greifen insbesondere bei der Hybridbauweise die Kriterien geringstmöglicher aeroelastischer Verwindung soweit sie flugbahnbeeinflussend sind sowie die Forderungen nach besonders leichter, aber sehr steifer Auslegung bei vertretbarem Materialeinsatz mit geringen Fertigungskosten.

Die derzeit vorgeschlagenen TVS-Ansätze berücksichtigen diese Kriterien für ein Ultraleichtflugzeug in Hybridbauweise entweder nicht, indem nur Flächenanordnungen vorgeschlagen werden oder bringen technische Ansätze, die vertretbar kaum zu verwirklichen sind bzw. die notwendige Abstimmung der Parameter im aufgezeigten Rahmen vermissen lassen.

Aufgabe der Erfindung ist es daher, ein Tragflächenverbundsystem für hybride Ultraleichtflugzeuge zu ermöglichen, daß eine hohe Flächeneffizienz, geringen Interfernz- und Parasitärwiderstand aufweist, ausreichende Stabilität in allen Freiheitsgraden hat und leicht steuerbar ist, böenunempfindlich reagiert und besonders leicht, steif und preiswert mit bekannten Methoden gebaut werden kann.

Diese Aufgabe wird im Wesentlichen mit einer boxwing-Konfiguration gelöst, bei der eine positiv gepfeilte Fläche und eine Rechteck- bzw. Trapezfläche mit definierten vertikalen und horizontalen Abständen, Einstellwinkeldifferenzen, Schränkungen und V-Stellungen durch Seitenscheiben im Verbund arbeiten und mit einem Universal beschlag sowie einem einzigen Rohrtypus als Struktur auskommen.

Berücksichtigt man die genannten aerodynamischen Erfordernisse hoher Flächeneffizienz, ist evident, daß die bekannten Mittel hohe Streckung und elliptische Auftriebsverteilung anders als bei einem Segelflugzeug für das Hybrid-Ultraleicht nicht zum Zuge kommen können, da hohe Streckungen mit Rohr ohne Abspannungen, Stielungen u.a. jedenfalls dann nicht machbar sind, wenn Verwindungssteife, parasitärer Widerstand und Abreißverhalten mit in die Betrachtung eingehen.

Berücksichtigt man weiter, daß für ein Tandemsystem, das gute Streckungen durch Aufteilung der Hauptfläche erreichen kann, die Schwierigkeit besteht, daß bei annähernd gleichen Flächen sogenanntes hunting, d.i. eine langperiodische Schwingung durch Aufschaukeln infolge differierender Flächengleitzahlen bei fast gleichem Dämpfungsfaktor zu erwarten ist, wird evident, daß eine Tandemlösung nur dann zum Erfolg führen kann, wenn die Flächenparameter in besonderer Weise aufeinander abgestimmt sind.

Bei der gefundenen Lösung wird daher eine positive gepfeilte Fläche mit Nasenwinkeln um 130° bezogen auf die Viertelpunktlinie und einer Zuspitzung von 0,5 bei einer linearen effektiven Schränkung von etwa 6° vor eine Rechteckfläche gesetzt, die geometrisch die gleiche Streckung aufweist. Die Rechteckfläche - oder schwach zugespitztes Trapez -weist eine gleichsinnige Schränkung um 3° auf und es ist eine Einstellwinkeldifferenz von 2° vorzusehen. Beide Flächen berühren sich in der Draufsicht nur im hinteren Endspitzenbereich der gepfeilten Fläche bezogen auf die Nase der Rechteckfläche oder weisen dort nur sehr geringen Abstand auf. Sie überschneiden sich nicht, sind aber vertikal im Mittel 16 bis 18% bezogen auf die Spannweite gestaffelt. Die untere, hintere Rechteckfläche kann zur Erhöhung der Bodenfreiheit eine leichte V-Form aufweisen, die obere Fläche zur Kompensierung eine wirkungsmäßig entgegengesetzte.

Berücksichtigt man, daß die Rollzeiten im Bereich des normal beherrschbaren liegen müßen und andererseits geringe Spannweite bei Ultraleichtflugzeugen mit relativ festliegender Flächenbelastung die Böenempfindlichkeit herabsetzt, so ergibt sich im Sinne der Erfindung für ein einsitziges Flugzeug eine Minimalspannweite von ca. 6 m, wenn ausreichende Flächenbelastung und Raum für eine Pilotenunterbringung im vertikalen Flächenabstand gewährleistet sein sollen.

Werden die Flächenenden im Sinne der Erfindung durch Seitenscheiben verbunden, wird erreicht, daß bei den genannten Parametern effektive Streckungen von 8 und mehr möglich sind, wobei die Gesamtauftriebsverteilung annähernd elliptisch resultiert und von nachteiligen Doppeldeckereffekten weitgehend frei bleibt.

Trotz festigkeitsmäßig günstiger geringer Spannweite und günstiger Flächen-/Massenkonzentration ist damit hohe Flächeneffizienz erreicht. Bei maßstabähnlichen Vergrößerungen, die ebenfalls im Sinne der Erfindung sind, bleiben diese Vorteile bezogen auf Normalkonfigurationen gewahrt.

Durch die so geschaffene Möglichkeit der Anordnung der tragenden, stabilisierenden Rechteckfläche im gekrümmten Stromlinienablauf der oberen Fläche - Unterseitenstrom -, kann die Stabilisierungsfläche einen etwas stärkeren Auftriebsanstieg über Anstellwinkel aus fehlendem Pfeilungseinfluß aufweisen und damit schnell hohe stabilisierende Momente erzeugen, ohne daß die Gefahr eines Strömungsabrisses vor Stallpunkt der Pfeilfläche besteht. Aus hier nicht darzulegenden Gründen wird damit auch das sog. hunting vermieden.

Mit dieser hohen, reagiblen Längsstabilität im flächengleichen Verbundtandem resultiert aus Vertikalböen zusätzlich effektiver Höhengewinn ohne größere Bewegungen um die Längsachse - Mikrodelphinflug.

Die notwendige schwache Stabilität um die Hochachse resultiert für die erfindungsgemäße Konfiguration aus den bekannten Wirkungen der Pfeilung sowie aus einem gewissen weathercock-Effekt der Seitenscheiben. Mit dieser Schwachen Hochachsenstabilität in Verbindung mit mäßiger Pfeilung und V-Form erfüllt die Konfiguration die Steuerungsanforderungen, wie sie für Nurflügel gefunden wurden, die gemischt in allen Freiheitsgraden über gemeinsame Höhen-/Querruder gesteuert werden - komplexe Zweiachssteuerung. Für das Verbundtandem werden diese Klappen ohne Nachteil am unteren Flügel vorgesehen, wobei aufgrund der geringen Spannweite und zur Vermeidung von negativen Wendemomenten eine innere Lage erreichbar wird. Ein Seitenruder - angeblasen - ist auch für den Start bei Seitenwind entbehrlich, da über die tief liegende, bodeneffektbelastete hintere Fläche bis zum Rotieren ausreichend Druck auf ein steuerbares Bugrad gegeben werden kann. Für die Landung bei Seitenwind - Ausrichten vor dem Aufsetzen - sind Widerstandsklappen als Bestandteil der Seitenscheiben im Sinne der Erfindung vorgesehen, die, gleichsinnig betätigt über Gleitzahlreduzierung den Slip ersetzen können.

Um den Kriterien des geringstmöglichen baulichen Aufwands Rechnung zu tragen, berücksicht die Erfindung den konfigurationstypischen Umstand, daß ein Verwinden von Flächenteilen im Verbund dem jeweils zugeordneten verbundenen Flächenteil eine Bewegung in der Flächenebene - nach vorne oder hinten aufnötigte. Wird eine solche Bewegung mittels Paßdiagonalen innerhalb aller Flächen ausgeschlossen, bleibt auch eine Verwindung ausgeschlossen. Die Flächen sind praktisch unverrückbar torsionssteif.

Um die Biegesteifigkeit auf einfachste Weise zu erhöhen, werden die Diagonalen mit den jeweiligen Nasen-/ und Endholmen so verbunden - durch Querträger -, daß alle Bauteile Biegelasten aufnehmen.

Damit hohe Wurzelbiegespannungen der Einzelflächen im Bereich ihrer mittleren Einspannung oder Lagerung - Cockpit/Fahrwerkbereich - vermieden werden, wird die obere Fläche erfindungsgemäß von der über Querträger verbundenen Diagonalen zur Systemmitte so abgestielt, daß, bei elastischer Aufhängung der Seitenscheiben, die Biegemomente aus der unteren Fläche mit den Biegemomenten aus der oberen Fläche im Stielpunkt der Fläche einen Nulldurchgang ergeben.

Eine feste Einspannung der Seitenscheiben liegt ebenfalls im Sinne der Konstruktion, wenn zugunsten geringeren Widerstands auf Abstielung verzichtete wird und große Momente in der Einspannung in Kauf genommen werden.

Mit dem gezeigten Aufbau der Hauptstruktur wird das Kriterium der Baueffizienz erfindungsgemäß insofern erfüllt, als die Nachrechnung für die infragekommenden Systemgrößen eine Rohrdimensionierung im 45 mm Bereich für mittelfeste Alulegierungen erlaubt, ohne daß bestimmte Anteile erheblich überdimensioniert wären.

Der Vorteil eines einzigen Rohrdurchmessers bzw. eines Rohrtyps für halbautomatische Bohrvorrichtungen wird durch den weiteren Vorteil ergänzt, daß bei dieser Auslegung alle Verbindungen mit einem universellen Beschlag, einem einfachen Knotenblech aus gut kaltverformbaren Edelstahl im Bereich von 1,5 mm Stärke vorgenommen werden können, wenn der Beschlag über bekannte Mittel so integriert wird, daß Rohrquetschung und Lochleibung praktisch ausbleiben. Der Beschlag garantiert darüberhinaus ein Mindestmaß an Flexibilität um örtlichen hohen Schubspannungen im Bereich der Befestigungselemente - Niet, Bolzen - zu begegnen.

Die Nachrechnung ergibt auch, daß das zu verwendende Rohr ohne Dimensionierungsschwierigkeiten in Verbindung mit dem Universalbeschlag den Aufbau des Fahrwerks, der Motorhalterung und des offenen Cockpits ermöglicht. Damit wird der Gesamtaufwand für die Herstellung und Wartung sehr gut.

Die erfindungsgemäße Auslegung der boxwing-Konfiguration, mit der alle Kriterien für eine zufriedenstellende Lösung der aufgezeigten Probleme befriedigend erfüllt werden können, wird im folgenden beispielhaft anhand von Zeichnungen erläutert.

Es ziegen:

Zeichnung I die Konfiguration in 3-Seiten-Ansicht

Zeichnung II die Flächenanschluß-Rohrstruktur

Zeichnung III ein mögliches Knotenblech.

Zeichnung I zeigt die Hauptflächen 1,2, die verbindenden Seitenscheiben 3 sowie die Hauptsteuerklappen 4 und die Widerstandsklappen 5 in einer erfindungsgemäßen Anordnung. Auf eine genaue Darstellung von Einstellwinkeln, Schränkungen u.ä. wurde hier verzichtet.

Einseitig ist die im Verbund verwindungsresistente Hauptrohrstruktur der Flächen mit den Diagonalen 8 und den Querträgern 8' eingezeichnet. Die Seitenscheiben können ebenfalls eine Rohrstruktur im Sinne eines klassischen N-Stiels aufweisen oder aus flächigem Material bestehen.

Die Seitenscheiben 3 sind elastisch zwischen die Flächen gehängt. Die Biegemomente der Flächen werden über die Querträger je auf drei Rohre verteilt. Die Flächenlasten werden über Stielung 9 in der Nähe des Nulldurchgangs der Momentenlinie abgenommen.

Die Lage des Motors mit Luftschraube 6 ist so vorgesehen, daß eine Abschirmung der Lärmemmittenten Propeller, Auspuffmündung durch die untere Fläche und die Seitenscheiben im Fluge nach unten gewährleistet ist.

Der Pilotensitz 7 ist schematisch gekennzeichnet. Der Pilotensitz kann den Kraftstoffvorrat enthalten, um trimmfrei zu bleiben.

Zeichnung II zeigt die Mittelstruktur, an der die Flächen angeschlossen werden, der Übersichtlichkeit halber mit geschnittenem Haupt-A-Rahmen 10.

Der Haupt-A-Rahmen 10 ist daher doppelt eingezeichnet. Auf eine Darstellung des Fahrwerks wurde hier zugunseten der Übersichtlichkeit verzichtet.

Nach vorne in Flugrichtung schließen sich an den Haupt-A-Rahmen der Bugradrahmen 11, gestützt durch die Streben 15 sowie die obere Flächenaufnahme 12, gestützt durch die Streben 13 an. Die Streben 14 begrenzen seitlich den Sitzbereich des Piloten und steifen die Anordnung zusätzlich aus.

Nach hinten schließt sich an den Haupt-A-Rahmen das Zentralrohr für die untere Flächenaufnahme 16 an, das durch die Streben 17 seitlich und die Strebe 18 nach oben und unten fixiert wird. Die Streben 19 stützen sich am Haupt-A-Rahmen und Strebe 18 so, daß an ihnen die Motorhalterung angeschlossen werden kann, wobei die auftretenden Momente gut abgesetzt werden und die Schubrichtung der vertikalen Schwerpunktlage angepasst werden kann.

Insgesamt ist die gesamte Rohrstruktur so angelegt, daß sich eigensteife Dreiecksverbände ergeben und gelenkige Anschlüsse leichter Demonteirbarkeit vorgesehen werden können.

Zeichnung III zeigt beispielhaft einen möglichen Universalbeschlag 20 als genietetes Knotenblech mit Bolzenverbindung zum anklappbaren Verbindungsrohr.

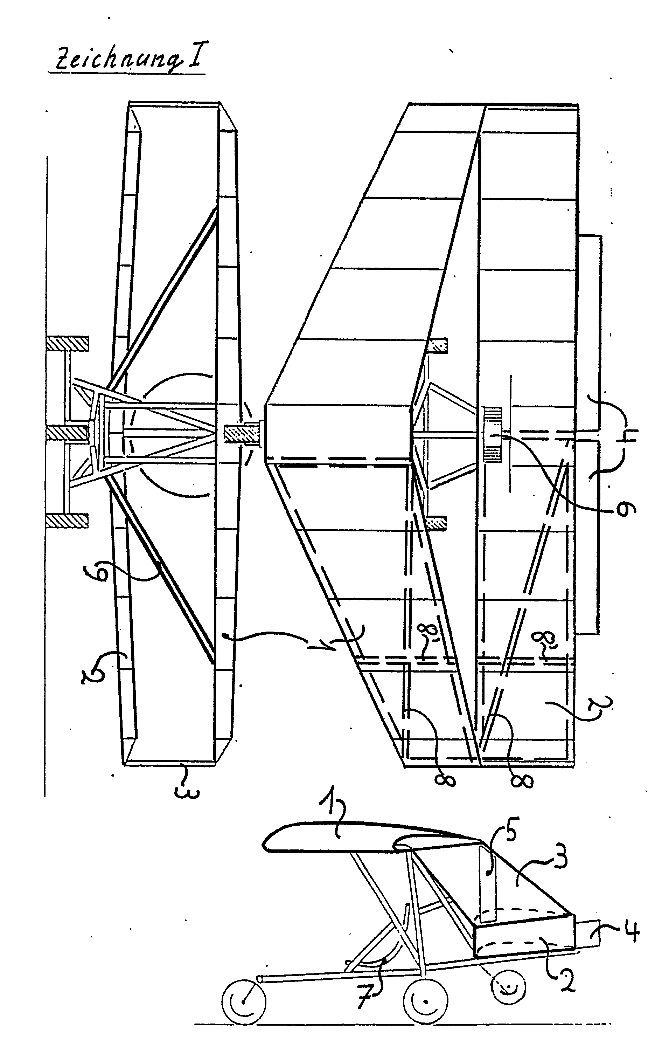

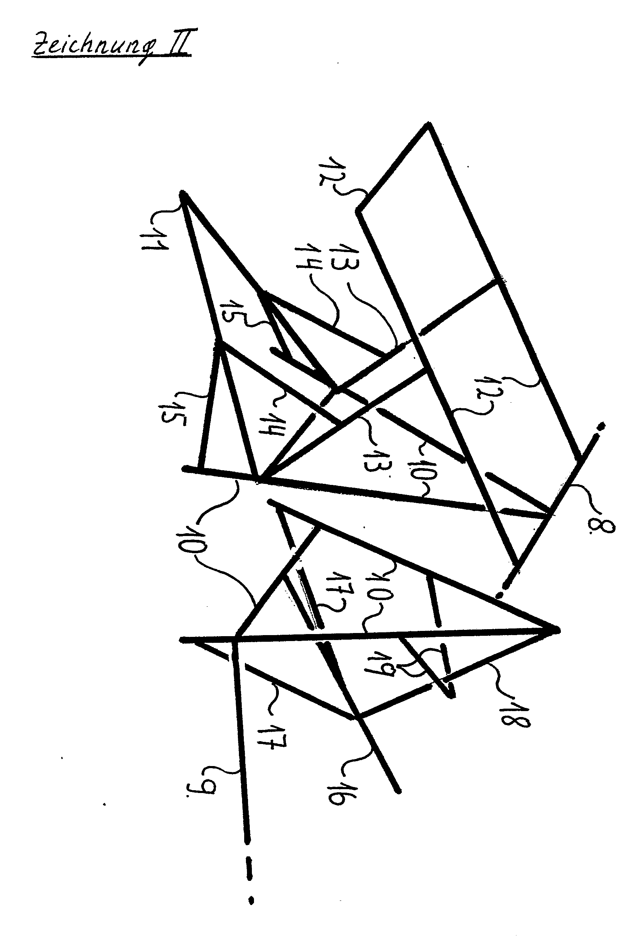

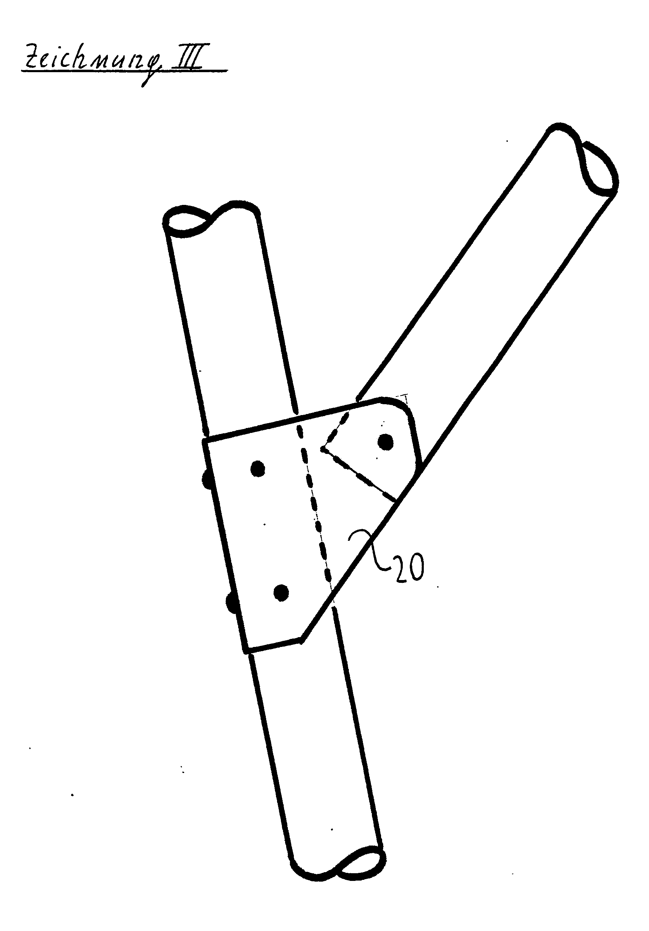

## Ansprüche

1. Ultraleichtes Tragflügelverbundflugzeug in boxwing-Konfiguration mit oben liegender vorderer Fläche, **dadurch gekennzeichnet**, daß die in Flugrichtung vordere, obenliegende Tragfläche (1) einen eingeschlossenen Nasenwinkel um 135 Grad bei positiver Pfeilung, ein Verhältnis von äußerer Flächentiefe zu innerer Flächentiefe von 0,4 bis 0,6 sowie eine Schränkung von bis zu -6 Grad bezogen auf die Profilsehne der Halbspannweite aufweist, dabei bezogen auf die Draufsicht so vor einer Rechteck oder Trapezfläche (2) angeordnet ist, daß für fliegbare Anstellwinkel praktisch keine Überschneidungen der Flächen auftreten, wobei bezogen auf die Frontansicht beide Flächen (1,2) geringe V-Stellungen aufweisen können, bei denen sich ein mittleres Verhältnis vertikaler Abstand der Flächen zur Gesamtspannweite von 0,15 bis 0.16 einstellt, wenn die verbindenden Seitenscheiben (3) im Bereich der größten Spannweite lotrecht angeordnet sind

2. Ultraleichtes Tragflügelverbundflugzeug nach Anspruch 1, **dadurch gekennzeichnet**, daß die Seitenscheiben (3) nicht lotrecht angeordnet sind, wobei von der Ausgangskonfiguration nach Anspruch 1 ausgehend die Flächen (1, 2) entsprechend verkürzt oder verlängert sind.

3. Ultraleichtes Tragflügelverbundflugzeug nach Anspruch 1 und 2, **dadurch gekennzeichnet**, daß der konstruktive Aufbau ein Rohrverbund ist, der bespannt wird, wobei die Flächen (1, 2, 3) durch Rohr in den Umrissen begrenzt sind und mit Paßdiagonalen (8) sowie alle Flächenlängsrohre verbindenden Querträgern (8´) ausgesteift werden, wobei die Seitenflächen (3) aus flächigem Vollmaterial bestehen können.

4. Ultraleichtes Tragflügelverbundflugzeug nach Anspruch 1, 2 und 3, **dadurch gekennzeichnet**, daß die Flächen (1, 2) an eine Struktur zur Aufnahme des Piloten, des Fahrwerks, des Motors angeschlossen ist, die aus einem Haupt-A-Rahmen (10) besteht, an den sich in Flugrichtung nach vorne oben die obere Flügelaufnahme (12) als Rohrrechteck oder als einzelner Mittelstab anschließt, durch die Träger (13) abgefangen, an den sich in Flugrichtung nach vorne unten die V-förmige Bugradkonfiguration (11) anschließt, abgefangen durch die Träger (14) und (15), und daß sich an den Haupt-A-Rahmen (10) in Flugrichtung nach hinten die Flächenaufnahme (16) anschließt, abgefangen durch die Träger (17) und (18), wobei Träger (18) zusätzlich durch die Motorträger (19) zum Haupt-A-Rahmen (10) fixiert ist.

5. Ultraleichtes Tragflügelverbundflugzeug nach Anspruch 1, 2, 3 und 4,

**dadurch gekennzeichnet**, daß anstelle von winkelfesten Verbindungen zwischen den Seitenscheiben (3) zu den Flächen (1, 2) zur Verbundfixierung Stiele (9) eingesetzt werden, die ausgehend von der Mittelstruktur (10) den oberen Flügel (1) oder den unteren Flügel (2) abstützen sowie Kombinationen aus Stielen, die der Stützung der Flächen dienen.

6. Ultraleichtes Tragflügelverbundflugzeug nach Anspruch 1, 2, 3, 4 und 5,

**dadurch gekennzeichnet**, daß zur Hauptsteuerung zwei Klappen (4) am unteren Flügel (2) vorgesehen sind und Widerstandsklappen (5) auf oder an den Seitenscheiben (3) zue Beeinflussung der Hochachse.

7. Ultraleichtes Tragflügelverbundflugzeug nach Anspruch 1, 2, 3, 4, 5 und 6,

**dadurch gekennzeichnet**, daß alle Rohrverbindungen, die eine gemeinsame Ebene aufspannen mittels Knotenblechen einheitlicher Art (20) vorgenommen werden.

Zeichnung I

Zeichnung II

Zeichnung. III

20

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | FR-A-2 557 065 (NGUYEN-MANH KHANH) * Seite 3, Zeilen 36,37; Seite 4, Zeilen 1-3,11-15,32-36; Figur 5 * | 1,6 | B 64 C 31/02 B 64 C 39/08 |
| A | FR-A-2 579 169 (CABROL) * Seite 1, Zeilen 1-21; Seite 7, Zeilen 1-14; Seite 9, Zeilen 17-26; Figuren 1-3,8 * | 1,2 | |
| A | WO-A-8 504 148 (SCHMITTLE) * Seite 10, Zeile 20 - Seite 11, Zeile 35; Figuren 1,4-7 * | 4,7 | |
| A | FR-A-2 536 366 (CLIMATOLOGIE AGRONOMIE AERONAULIQUE) * Seite 4, Zeilen 10-18; Figuren 1,5,6,9 * | 4 | |

|  |  |
|---|---|
| | **RECHERCHIERTE SACHGEBIETE (Int. Cl.4)** |
| | B 64 C |

Der vorliegende Recherchenbericht wurde für alle Patentansprüche erstellt

| Recherchenort | Abschlußdatum der Recherche | Prüfer |
|---|---|---|
| DEN HAAG | 09-02-1989 | ZERI A. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
........................................................................
& : Mitglied der gleichen Patentfamilie, übereinstimmendes Dokument